# EUROPÄISCHE PATENTSCHRIFT

(11) **EP 1 702 396 B1**
(45) Veröffentlichungstag und Bekanntmachung des Hinweises auf die Patenterteilung: **08.07.2015**
(21) Anmeldenummer: 04804823.5
(22) Anmeldetag: 14.12.2004
(51) Int. Cl.: H02K 1/16

(54) **STÄNDER FÜR EINE ELEKTRISCHE MASCHINE**
STATOR FOR AN ELECTRICAL MACHINE
STATOR DE MACHINE ELECTRIQUE

(30) Priorität: 30.12.2003 DE 10361858
(43) Veröffentlichungstag der Anmeldung: 20.09.2006
(73) Patentinhaber: ROBERT BOSCH GMBH, 70442 Stuttgart (DE)
(72) Erfinder: SHENDI, Alexander, 71679 Asperg (DE)
(86) Internationale Anmeldenummer: PCT/EP2004/053466
(87) Internationale Veröffentlichungsnummer: WO 2005/064766

(56) Entgegenhaltungen:
- EP-A- 1 353 431
- US-B1- 6 313 559
- OJO O ED - INSTITUTE OF ELECTRICAL AND ELECTRONICS ENGINEERS: "Multiobjective optimum design of electrical machines for variable speed motor drives" PROCEEDINGS OF THE INDUSTRY APPLICATIONS SOCIETY ANNUAL MEETING. DEARBORN, SEPT. 28 - OCT. 1, 1991, NEW YORK, IEEE, US, Bd. VOL. 2, 28. September 1991 (1991-09-28), Seiten 163-168, XP010056290 ISBN: 0-7803-0453-5
- BIEDINGER J-M ET AL: "DIMENSIONNEMENT DES ACTIONNEURS ELECTRIQUES ALIMENTES A FREQUENCE VARIABLE SOUS FAIBLE TENSION" EUROPEAN PHYSICAL JOURNAL APPLIED PHYSICS, EDP SCIENCES, LES ULIS, FR, Bd. 7, Nr. 3, September 1999 (1999-09), Seiten 247-261, XP000930361 ISSN: 1286-0042

## Beschreibung

### Stand der Technik

Die Erfindung betrifft einen Ständer einer elektrischen Maschine nach der Gattung des unabhängigen Patentanspruchs.

Aus der Offenlegungsschrift WO 01/54254 A1 ist ein Ständer für eine elektrische Maschine bekannt, der in der sogenannten Flachpaket-Technik hergestellt wird. Die Flachpaket-Technik lässt sich dadurch beschreiben, dass zunächst einzelne streifenförmige Lamellen bereitgestellt werden, die zu einem sogenannten Flachpaket paketiert werden. Hierzu werden die Lamellen derartig angeordnet, dass diese deckungsgleich aufeinander gestapelt werden. Es wird dadurch ein in etwa quaderförmiges, im Wesentlichen flaches Ständereisen gebildet, das auf einer Seite kammartig die elektromagnetisch wirksamen Nuten und Zähne aufweist, die nach Fertigstellung des Ständers für die Wechselwirkung mit einem Läufer vorgesehen sind. In dieses kammartige quaderförmige Ständereisen wird eine separat vorbereitete, in der Regel dreiphasige Wicklung eingesetzt, so dass sich zunächst entweder alle Spulenseiten in den Nuten befinden oder der größte Teil der Spulenseiten, wie in der angegebenen Schrift offenbart. Dieses Halbzeug aus Ständereisen mit Wicklung wird anschließend in einer Vorrichtung derartig rundgebogen, dass ein kreisringförmiger ringzylmdrischer Ständer entsteht. Dabei werden gegebenenfalls vorhandene Wicklungsüberhänge, welche beim Einlegen der Wicklung in das Ständereisen zunächst nicht in Nuten angeordnet sind, im Zuge des Rundbiegens in die entsprechenden Nuten eingefügt. Nach dem Rundbiegen stehen sich zwei in peripherer Richtung orientierte Stirnseiten unmittelbar gegenüber. Diese Stirnseiten können anschließend miteinander verbunden werden, beispielsweise durch einen Schweißvorgang.

Im Rahmen der Entwicklungsarbeit an diesem Ständer und der zugehörigen elektrischen Maschine hat sich gezeigt, dass durch verschiedene Maßnahmen, insbesondere Maßverhältnisse an einem derartigen Ständer bzw. Ständereisen sehr unterschiedliche Ergebnisse erzielt werden.

Aus der Schrift EP 1353 431 A ist ein Ständer für eine elektrische Maschine bekannt, der in der Flachpakettechnik hergestellt ist. Aus der Veröffentlichung "Multiobjective optimum design of electrical machines for variable speed motor drives" PROCEEDINGS OF THE_INDUSTRIAL APPLICATIONS SOCIETY ANNUAL MEETING, DEARBORN, Sept. 28 -Oct. 1, 1991, NY, IEEE, US, Vol. 2, 28. September 1991 (1991-09-28) sind Überlegungen bekannt, die im Zusammenhang mit der Optimierung von elektrischen Maschinen stehen.

### Vorteile der Erfindung

Der erfindungsgemäße Ständer mit den Merkmalen des Hauptanspruchs hat den Vorteil, dass durch das aus der Nutfläche und der Stirnfläche gebildete Verhältnis A, welches im Falle, dass das Ständereisen sechsunddreißig Innenzähne hat, zwischen 0,4 und 0,6 beträgt und im Falle, dass das Ständereisen achtundvierzig Innenzähne hat, zwischen 0,45 und 0,6 beträgt, eine erste Annäherung für eine optimale Auslegung eines Ständers gemäß dem vorgesehenen Herstellungsverfahren angibt.

Diese Verhältnisse ergeben eine deutliche Verbesserung hinsichtlich der Dimensionierung, so dass mit diesen Verhältnisbereichen bei geringerem Materialeinsatz einerseits die Stromausbeute bezogen auf die Masse des Ständers verbessert wird und andererseits der Biegewiderstand des Ständers bzw. Ständereisens in einem Bereich liegt, der sowohl ein Biegen des flachen Ständers in die runde Form erlaubt als auch die Formstabilität des runden Ständers erlaubt.

### Zeichnungen

In den Zeichnungen sind Ausführungsbeispiele eines erfindungsgemäßen Ständers dargestellt. Es zeigen
- Figur 1: ein Flachpaket ohne Wicklung,
- Figur 2: ein Flachpaket mit eingelegter dreiphasiger Wicklung
- Figur 3: das Flachpaket mit Wicklung aus Figur 2 nach dem gemeinsamen Rundbiegen von Wicklung und Eisenpaket,
- Figur 4: ausschnittsweise die Ansicht einer Stirnfläche eines Ständereisens zur Verdeutlichung von Nutfläche und Stirnfläche,
- Figur 5: ausschnittsweise einen Querschnitt durch eine mit Leitern versehene Nut zur Verdeutlichung der Leiterquerschnittsfläche,
- Figur 6a: ein erstes "Stromdiagramm",
- Figur 6b: ein zweites "Stromdiagramm",
- Figur 7: eine ausschnittsweise Ansicht zweier Innenzähne mit der dazugehörigen Nut,
- Figur 8: ein dreidimensionales Diagramm mit der Darstellung des Abgabestroms eine Kfz-Generators in Abhängigkeit zweier verschiedener Längenverhältnisse bei Motorleerlauf, entsprechend ca. 1800 U/min des Generatorläufers

### Beschreibung

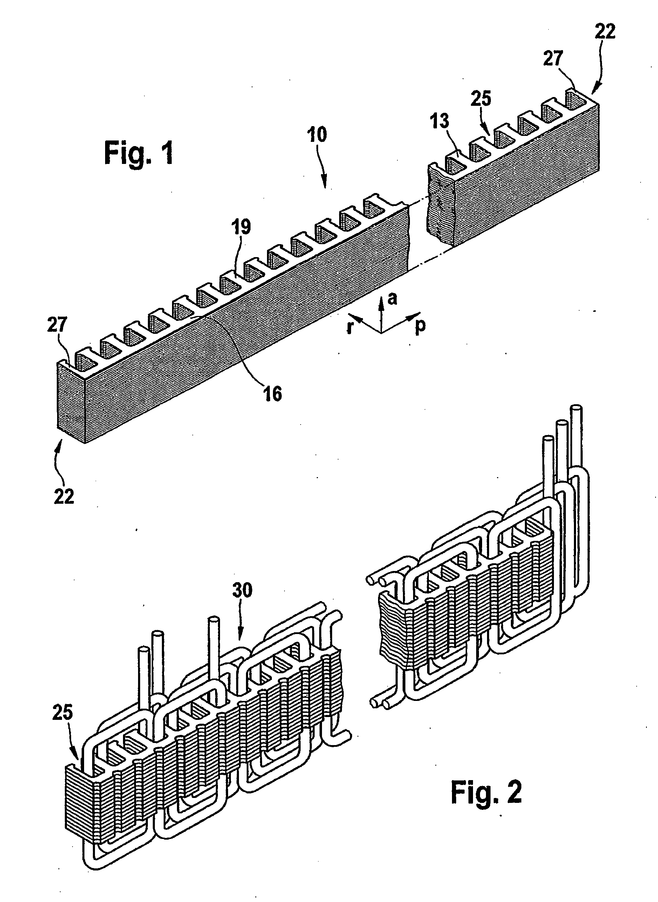

Figur 1 zeigt ein flaches bzw. im Wesentlichen flaches Ständereisen 10, das aus einer bestimmten Anzahl einzelner Lamellen 13 paketiert worden ist. Die Lamellen 13 sind in der sogenannten Axialrichtung a übereinander geschichtet, so dass diese deckungsgleich übereinander angeordnet sind. Ein Joch 16 erstreckt sich in die sogenannte Umfangsrichtung p, die sich später beim fertiggestellten Ständer ringförmig erstreckt. Vom Joch 16 gehen in radialer Richtung r sogenannte Innenzähne 19 aus, die sich später im fertiggestellten Ständer nach radial innen erstrecken. Das Ständereisen 10 weist in Umfangsrichtung p jeweils zwei stirnseitig Enden 22 auf, die nach dem Rundbiegen des Ständereisens 10 unmittelbar aneinander liegen. Ist das Ständereisen 10 beispielsweise mit sechsunddreißig Nuten 25 ausgestattet, so weist dieses Ständereisen 10 insgesamt fünfundreißig ganze Innenzähne 19 und an den stirnseitigen Enden 22 je einen halben Innenzahn 27 auf. Im rundgebogenen Ständereisen 10 bzw. Ständer ergänzen sich die beiden dann aneinanderliegenden halben Innenzähne 27 zu einem ganzen Innenzahn, Bei einem Ständereisen 10 mit achtundvierzig Nuten 25 weist das Ständereisen 10 siebenundvierzig ganze Innenzähne 19 und ebenfalls zwei halbe Innenzähne 27 in analoger Weise auf.

Figur 2 zeigt das Ständereisen 10 aus Figur 1, in dessen Nuten 25 eine Ständerwicklung 30 eingesetzt ist. Ist der Ständer für einen Drehstromgenerator vorgesehen, so ist die Ständerwicklung 30 als dreiphasige Wicklung ausgeführt. Die Ständerwicklung 30 wird zunächst separat von der Herstellung des Ständereisens 10 hergestellt. Die Ständerwicklung 30 kann dabei entweder aus einzelnen Strängen bestehen, die jeweils für sich separat in die Nuten 25 des Ständereisens 10 eingesetzt werden. Die Ständerwicklung 30 kann jedoch auch, wie im eingangs zitierten Stand der Technik, derart hergestellt werden, dass die drei Stränge der Ständerwicklung 30 zu einer praktisch einstückigen Ständerwicklung 30 vorbereitet werden. Diese praktisch einstückige Ständerwicklung 30 wird dann insgesamt und in einem Schritt in die Nuten 25 des Ständereisens 10 eingesetzt.

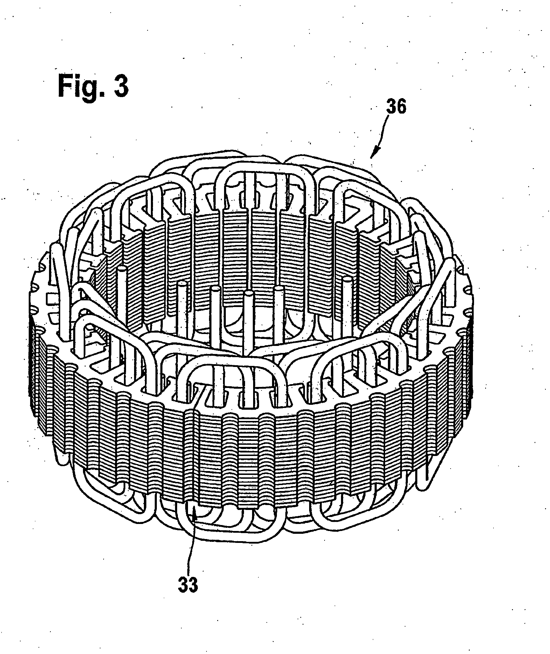

Nach dem Einlegen der Ständerwicklung 30 in das Ständereisen 10, wie zuvor beschrieben, wird das Halbzeug aus diesen beiden Teilen derart rundgebogen, dass sich die Innenzähne 19 und halben Innenzähne 27 nach radial innen erstrecken und somit das Joch 16 die Innenzähne 19 bzw. 27 umgeben. Die Nuten 25 sind dann naturgemäß nach radial innen offen, siehe auch Figur 3. In Figur 3 ist deutlich eine Stoßstelle 33 zu erkennen, an der die beiden bereits erwähnten halben Innenzähne 27 unmittelbar aneinander liegen. Das Ständereisen 10 bzw. der somit vorliegende Ständer 36 weist somit nunmehr eine im Wesentlichen ringzylindrische Form auf. Diese ringzylindrische Form hat eine Zylinderachse, die im Inneren des Ständers 36 einbeschreibbar ist. Diese Zylinderachse erstreckt sich in der zuvor beschriebenen Axialrichtung und somit in Stapelrichtung der einzelnen Lamellen 13.

Das prinzipielle Herstellungsverfahren gemäß den Figuren 1 bis 3 beschreibt die wesentlichen Merkmale der sogenannten Flachpaket-Technik zur Herstellung von Ständern 36 für elektrische Maschinen. Kurzgefasst lässt sich diese Flachpaket-Technik durch folgende Merkmale beschreiben: Es wird ein im Wesentlichen streifenförmiges Ständereisen 10 bereit gestellt, das gegebenenfalls einen lamellierten Aufbau aufweist. Eine zumindest einteilige Ständerwicklung 30 wird in die Nuten 25 des Ständereisens 10 eingebracht. In einem folgenden Schritt wird das Ständereisen 10 mit der Ständerwicklung 30 in eine ringzylindrische Form gebracht.

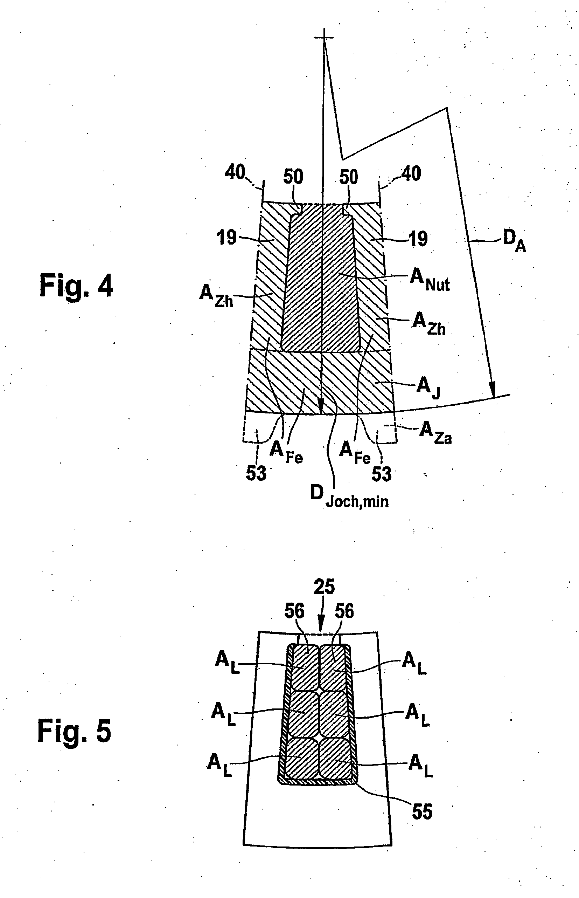

Figur 4 zeigt ausschnittsweise eine Ansicht auf die in Richtung der Zylinderachse bzw. Axialrichtung a orientierte Stirnfläche des Ständereisens 10. Als Stirnfläche A_{Fe} wird hier das Kreisringsegment zwischen zwei benachbarten radial orientierten Mittellinien 40 zweier unmittelbar benachbarter Innenzähne 19 angenommen. Die Stirnfläche A_{Fe} besteht dem zu Folge aus den Flächenanteilen zweier halber Innenzähne 19 und dem entsprechenden Jochflächenanteil zwischen den Mittellinien 40. Eine Nutfläche A_{Nut} ergibt sich aus den Konturen der entsprechenden Jochfläche und der Innenzähne 19 sowie durch die kreisförmige Begrenzungslinie zwischen zwei Zahnköpfen 50 der Innenzähne 19. Bei Untersuchungen an Ständern 36 der vorgenannten Flachpaket-Technik hat sich herausgestellt, dass ein aus der Nutfläche A_{Nut} und der Stirnfläche A_{Fe} gebildetes Verhältnis A günstigerweise zwischen 0,4 und 0,8 beträgt. Es lässt sich somit als günstige Merkmalskombination für einen Ständer 36 festhalten, dass dieser in Flachpaket-Technik hergestellte Ständer 36 zumindest aus einem Ständereisen 10 und einer Ständerwicklung 30 besteht, wobei das Ständereisen 10 eine im Wesentlichen ringzylindrische Form aufweist und das Ständereisen 10 eine Axialrichtung a aufweist, die in Richtung einer Zylinderachse orientiert ist und das Ständereisen 10 eine in Richtung der Zylinderachse orientierte Stirnfläche aufweist, die eine Nutfläche A_{Nut} aufweist, wobei ein aus der Nutfläche A_{Nut} und der Stirnfläche A_{Fe} gebildetes Verhältnis A zwischen 0,4 und 0,8 beträgt.

In einer weiteren Annäherung hat sich ergeben, dass das Verhältnis A noch günstiger ist, wenn dieses zwischen 0,4 und 0,7 liegt

Die für das Verhältnis A betrachtete Stirnfläche umfasst nicht die in Axialrichtung a ermittelbare Querschnittsfläche A_{Za}, die beispielsweise durch die entsprechende Querschnittsfläche zweier nach außen radial außen orientierten Halbzähne 53 gebildet ist. Beschreibt die Außenkontur des Jochs 16 in radialer Richtung keine Kreislinie, dann wird als Außendurchmesser zur Berechnung der Stirnfläche A_{Fc} der geringste Durchmesser, den die Außenkontur des Ständereisens im Bereich b₃ über der Nut beschreibt, herangezogen.

Es wurde weiterhin festgestellt, dass das Verhältnis A je nach Zähnezahl des Ständereisens 10 unterschiedliche ideale Werte annehmen kann. So wurde herausgefunden, dass Ständereisen 10 mit achtundvierzig Innenzähnen 19 günstiger Weise ein Verhältnis A zwischen 0,45 bis 0,7 aufweisen. Es ist klar, dass einer der achtundvierzig Innenzähne 19 als mit zwei halben Innenzähnen 27 gleichwertig anzusehen ist.

In zweiter Annäherung wurde herausgefunden, dass Ständereisen 10 mit achtundvierzig Innenzähnen 19 19 günstiger Weise ein Verhältnis A zwischen 0,45 und 0,6 annehmen. Für Ständereisen 10 mit sechsunddreißig Innenzähnen 19 gilt als günstiges Verhältnis A ein Zahlenbereich zwischen 0,4 bis 0,6.

In zweiter Annäherung gilt als günstiges Verhältnis für ein Ständereisen 10 mit sechsunddreißig Innenzähnen 19 ein Verhältnis A zwischen 0,4 und 0,55.

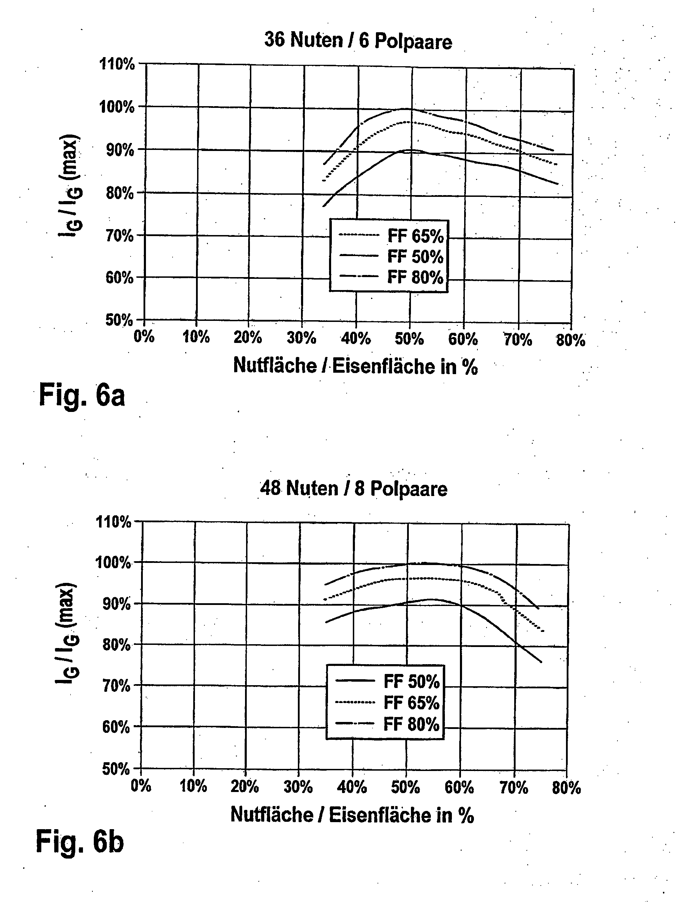

In Verbindung mit Figur 4 wird erläutert, wie die Nutfläche A_{Nut} ermittelt wird. In Verbindung mit Figur 5 wird erläutert, wie die Querschnittsfläche der sich in der Nut 25 befindlichen Leiter 56 ermitteln lässt. Jeder Leiter 56 hat einen Leiterquerschnitt A_{L}. Die Summe aller Leiterquerschnitte in einer Nut 25 ergibt sich somit aus der Summe der einzelnen Leiterquerschnitte A_{L} zu A_{L,ges}· Ein Nutfüllfaktor F ist hier definiert als das Verhältnis aus der Querschnittsfläche aller Leiter 56 in einer Nut 25 und der Nutfläche A_{Nut}. Für Ständereisen 10 bzw. Ständer 36 mit sechsunddreißig Nuten 25 bzw. sechsunddreißig Innenzähnen 19 in einer Ausführung für Drehstommaschinen mit sechs Polpaaren wurde in Abhängigkeit vom Verhältnis A und vom Füllfaktor F der jeweilige Ständerstrom I_{G} ermittelt. Es wurden hierbei Füllfaktoren F von 50%, 65% und 80% untersucht. Es wurde dabei ermittelt, dass der höchste Generatorstrom für einen Füllfaktor F von 80% erreicht wird, siehe auch Figur 6a. Dem zu Folge findet sich für einen Füllfaktor F von 80% die entsprechende Kurve in Figur 6a mit der Bezeichnung F₈₀. Die Abszissenachse gibt das Verhältnis A in einem Bereich zwischen in etwa 0,6 und 2,0 wieder, während die Ordinatenachse das Verhältnis B zwischen 0,5 und 1,0 wiedergibt. Das Verhältnis B wird in Abhängigkeit vom Stromverlauf für einen Füllfaktor F von 80% ermittelt. Man hat hierzu bei einer entsprechenden elektrischen Maschine mit einem Ständer 10 und einem Nutfüllfaktor F = 80% den entsprechenden Generatorstrom bzw. Ständerstrom ermittelt. Der Maximalwert dieses Stromverlaufs ist gleich 100% bzw. 1,0 gesetzt. Ausgehend von diesem Maximalwert wurde der Kurvenverlauf für einen Nutfüllfaktor F₈₀ aufgetragen. Analog dazu wurde der Ständerstrom für einen Nutfüllfaktor F = 65% bzw. einen Nutfüllfaktor F =50% ermittelt. Die entsprechenden Kurven sind mit F₆₅ bzw. F₅₀ bezeichnet. Die entsprechenden Kurvenverläufe wurden an den Maximalwert des Stroms für einen Nutfüllfaktor F = 80% bezogen.

Auf Grund dieser Ergebnisse wird für einen Ständer in Flachpaket-Technik mit sechsunddreißig Nuten 25 bzw. sechsunddreißig Innenzähnen 19 bei sechs Polpaaren ein Verhältnis A zwischen 0,4 und 0,55 bevorzugt, wobei gleichzeitig der Nutfüllfaktor zwischen 50% und 80 % liegen soll.

Figur 6b zeigt ein zum in Figur 6a gezeigten Diagramm analoges Diagramm bezüglich eines Ständers 36 mit achtundvierzig Nuten 25 bzw. achtundvierzig Innenzähnen 19 bei acht Polpaaren für eine entsprechende Drehstrommaschine. Auf Grund der hier ermittelten Ergebnisse wird hier eine Kombination bevorzugt, wonach das Verhältnis A zwischen 0,45 und 0,6 und der Füllfaktor F zwischen 50% und 80% liegt.

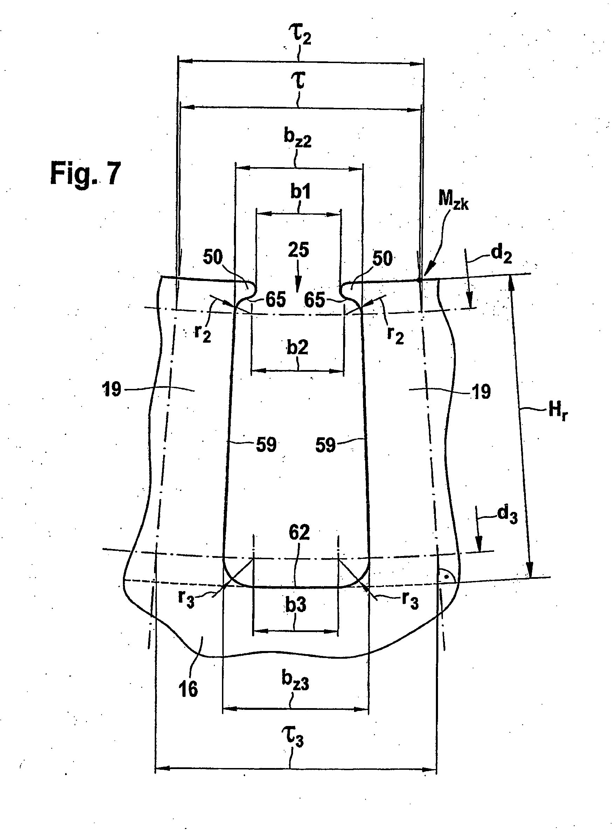

Anhand von Figur 7 wird erläutert, welche wichtigen Zusammenhänge für eine Nut 25 in geometrischer Hinsicht gelten. Die Breite b1 bezeichnet die im rundgebogenen Zustand vorhandene Öffnungsbreite des Nutschlitzes bzw. der Nut 25. Die Nut 25 hat eine Kontur, die jochseitig durch gegenüberliegende Zahnseiten 59 und durch eine Jochkontur 62 begrenzt ist. Die Zahnseiten 59 sind in diesem Ausführungsbeispiel beim Übergang von den Zahnseiten 59 in die Jochkontur 62 durch Radien r₃ ausgerundet. Der Begriff "jochseitig" bedeutet hier, dass hier der Bereich der Nut 25 gemeint ist, der sich auf der dem Joch 16 zugewandten Seite der Nut 25 befindet. "Zahnkopfseitig" bedeutet, dass sich der entsprechende Bereich der Nut 25 auf der Seite der Nut 25 befindet, die dem Zahnkopf 55 zugewandt und somit dem Joch 16 abgewandt ist. Im Ausführungsbeispiel haben die Zahnseiten 59 einer Innennut 25 in Umfangsrichtung untereinander einen maximalen Abstand, der hier mit b_{z3} bezeichnet wird. bz₃ setzt sich somit für eine Nut 25, die im Bereich zwischen Joch 16 und Zahn 19 durch Radien ausgerundet ist, aus dem Abstand b₃ zwischen den beiden Radienmittelpunkten und den beiden Radien r₃ selbst zusammen, so dass sich für b_{z3} eine Gleichung ergibt, b_{z3} = b₃ + 2*r₃. Für den Fall, dass eine Nut 25 nicht durch irgendwelche Radien ausgerundet ist, sondern beispielweise durch Ellipsen, Schrägen oder irgendwelche eckigen Übergänge zwischen Zahnseite 59 und Jochkontur 62, soll b_{z3} der jochseitig breiteste Abstand zwischen den beiden Zahnseiten 59 sein.

Die Nutteilung τ₂ ist als Abstand zweier Zahnmitten auf dem Durchmesser des Abstands b_{z2}, die Nutteilung τ₃ als Abstand zweier Zahnmitten auf dem Durchmesser des Abstands b_{z3} definiert. Der Durchmesser d3 ist der Durchmesser, auf dem der Abstand b_{z3}, der Durchmesser d2 ist der Durchmesser, auf dem der Abstand b_{z2} definiert ist. Für das Verhältnis aus d3 zu d2 soll ein Zahlenbereich zwischen 1,1 und 1,25 gelten.

Analog hierzu gibt es eine zabnkopfseitige Kontur der Innennut 25, die durch die gegenüberliegenden Zahnseiten 59 und Zahnkopfkonturen 65 begrenzt ist. Die Zahnkopfkontur 65 beginnt in diesem Ausführungsbeispiel mit dem Übergang von den geradlinigen Zahnseiten 59 in die durch Radien r₂ vorgegebene Verengung des Nutschlitzes bzw. der Nut 25 in Richtung nach radial innen. Die Breite b₂ bezeichnet hier den Abstand der Radienmittelpunkte der Radien r₂, so dass sich als zahnkopfseitige Breite der Nut 25 bzw. als Abstand der Zahnseiten 59 die Summe aus dem Mittelpunktsabstand b₂ und den beiden Radien r₂ zu b_{z2} ergibt.

Für den Fall, dass sich im Sinne der oben genannten Definitionen keine eindeutige Zuordnung der Abstände b_{z2} b bzw. b_{z3} ergibt, beispielsweise bei leicht bauchigen Zahnseiten 59, soll hier folgende weitere Definition für die genannten Abstände b_{z2} und b_{z3} gelten: auf Grund von gerundeten Zahnkopfkonturen 65, was bedeutet, dass der Übergang von den Zahnbreiten 59 bis in den Innenumfang eines Ständereisens 10 bzw. des Ständers 30 komplett gerundet ist, lässt sich unter Umständen nicht eindeutig eine radiale Höhe für die Nut 25 angeben. Hilfsweise soll hier der radiale Abstand zwischen der Jochkontur 62 bzw. deren kreisförmiger Verlängerung und einem Zahnkopfmittelpunkt gelten. Die Zahnkopfmittelpunkte bzw. der Abstand zweier benachbarter Zahnkopfmittelpunkte definiert im übrigen die Nutteilung τ. Wird dieser Abstand zu 100% gesetzt, bedeutet dies, dass die Breite bzw. der Abstand b_{z2} ausgehend vom tiefsten Punkt der Nut 25 bzw. vom Joch 16 ausgehend, von dem aus sich die Innenzähne 19 erstrecken, bei 90% ermittelt werden, analog gilt dies für den Abstand b_{z3}, der in einer Höhe von 8% ermittelt wird.

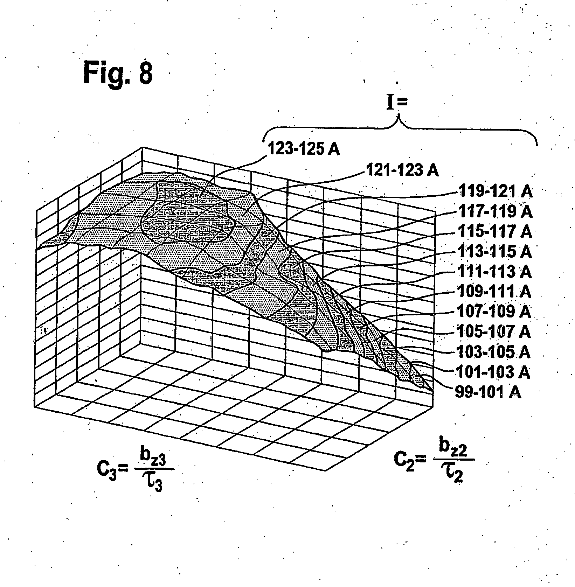

In Figur 8 ist ein Zusammenhang zwischen dem Ständerstrom bei Motorleerlauf (entspricht einer Drehzahl des Generatorläufers von ca.1800/min) in Abhängigkeit von den Verhältnissen c2 und c3. c2 ist der Quotient aus der zahnkopfseitigen Nutbreite bzw. dem Abstand b_{z2} und der Nutteilung τ₂ am Zahn, c3 ist das Verhältnis gebildet aus dem jochseitigen Abstand b_{z3} und der Nutteilung τ₃ am Joch. Es ist vorgesehen, dass für einen Ständer 36 das Verhältnis c2 und das Verhältnis c3 zwischen 0,45 und 0,65 beträgt.

Besonders bevorzugt wird, dass c2 zwischen 0,50 und 0,60 beträgt und C3 zwischen 0,47 und 0,6 beträgt.

Für den Fall, dass die Übergänge zwischen den Zahnseiten 59 und der Jochkontur 62 bzw. zwischen den Zahnseiten 59 und der Zahnkopfkontur 65 gerundet sind, werden Radien r₁ bzw. r₂ zwischen 0,3 und 2,0 mm bevorzugt.

## Patentansprüche

1. Ständer für eine elektrische Maschine, insbesondere einen Drehstromgenerator, wobei der Ständer (36) in Flachpaket-Technik hergestellt ist und zumindest aus einem Ständereisen (10, 30) besteht, das Ständereisen (10) eine im Wesentlichen ringzylindrische Form aufweist, wobei das Ständereisen (10) eine Axialrichtung (a) aufweist, die in Richtung einer Zylinderachse orientiert ist und das Ständereisen (10) eine in Richtung der Zylinderachse orientierte Stirnfläche hat und
- als eine Stirnfläche (AFe) zwischen zwei benachbarten radial orientierten Mittellinien (40) zweier unmittelbar benachbarter Innenzähne (19) ein Kreisringsegment zwischen den zwei benachbarten radial orientierten Mittellinien (40) zweier unmittelbar benachbarter Innenzähne (19) angenommen wird
- und diese Stirnfläche (AFe) aus den Flächenanteilen zweier halber Innenzähne (19) und dem entsprechenden Jochflächenanteil zwischen den Mittellinien (40 besteht
- und eine Nutfläche (A_{Nut}) aus Konturen einer Jochfläche und der Innenzähne (19) und einer kreisförmigen Begrenzungslinie zwischen zwei Zahnköpfen (50) der Innenzähne (19) bestimmt ist,
- wobei ein aus der Nutfläche (A_{Nut} zwischen den zwei benachbarten radial orientierten Mittellinien (40) und der Stirnfläche (AFe) zwischen den zwei benachbarten radial orientierten Mittellinien (40) gebildetes Verhältnis A
- im Falle, dass das Ständereisen (10) sechsunddreißig Innenzähne (19) hat, zwischen 0,4 und 0,6 beträgt und
- im Falle, dass das Ständereisen (10) achtundvierzig Innenzähne (19) hat, zwischen 0,45 und 0,6 beträgt
- wobei im Falle, dass eine Außenkontur des Jochs (16) in radialer Richtung zwischen den zwei benachbarten radial orientierten Mittellinien (40) keine durchgehende Kreislinie beschreibt, als Außendurchmesser zur Berechnung der Stirnfläche (AFe) der geringste Durchmesser, den die Außenkontur des Ständereisens in einem Bereich (b3) über der Nut (25) beschreibt, herangezogen wird.

2. Ständer nach Anspruch 1, **dadurch gekennzeichnet, dass** das Ständereisen (10) sechsunddreißig Innenzähne (19) hat und das Verhältnis A zwischen 0,40 und 0,55 liegt.

3. Ständer nach einem der vorhergehenden Ansprüche, **dadurch gekennzeichnet, dass** der Nutfüllfaktor (F) zwischen 50% und 80% beträgt.

4. Ständer nach Anspruch 3, **dadurch gekennzeichnet, dass** der Nutfüllfaktor F zwischen 60% und 70% beträgt.

5. Ständer nach einem der vorhergehenden Ansprüche, **dadurch gekennzeichnet, dass** eine Nut (25) eine Kontur hat, die jochseitig durch gegenüberliegende Zahnseiten (59) und eine Jochkontur (62) begrenzt ist, wobei die Zahnseiten (59) einer Nut (25) in Umfangsrichtung untereinander einen maximalen Abstand (b_{z3}) aufweisen und dass eine Nutteilung (τ₃) der Abstand zweier direkt benachbarter Zahnmitten des Ständereisens (10) auf dem Durchmesser des maximalen Abstands (bz3) ist, wobei ein Verhältnis (c3) gebildet aus dem Abstand (bz3) und der Nutteilung (τ₃) am Zahn zwischen 0,45 und 0,65 beträgt.

6. Ständer nach einem der vorhergehenden Ansprüche, **dadurch gekennzeichnet, dass** eine Nut (25) eine Kontur hat, die zahnkopfseitig durch gegenüberliegende Zahnseiten (59) und Zahnkopfkonturen (62) begrenzt ist, wobei die Zahnseiten (59) einer Nut (25) am Übergang in die Zahnkopfkonturen (65) in Umfangsrichtung untereinander einen Abstand (b_{z2}) aufweisen und dass eine Nutteilung (τ₂) der Abstand zweier direkt benachbarter Zahnmitten auf dem Durchmesser des Abstands (bz2) des Ständereisens (10) ist, wobei ein Verhältnis (c2) gebildet aus dem Abstand (bz2) und der Nutteilung (τ₂) am Zahn zwischen 0,45 und 0,65 beträgt.

7. Ständer nach einem der vorhergehenden Ansprüche, **dadurch gekennzeichnet, dass** (c2) zwischen 0,50 und 0,60 und (c3) zwischen 0,47 und 0,60 beträgt.

8. Ständer nach einem der vorhergehenden Ansprüche, **dadurch gekennzeichnet, dass** die Zahnseiten (59) durch gerundete Übergänge in die Zahnkopfkonturen (65) und die Jochkontur (62) übergehen, wobei die Radien zwischen 0,3mm und 2,0mm betragen.

## Claims

1. Stator for an electrical machine, in particular a three-phase generator, wherein the stator (36) is produced using flat-pack technology and at least comprises an iron stator core (10, 30), which iron stator core (10) has a substantially cylindrical shape, wherein the iron stator core (10) has an axial direction (a) which is oriented in the direction of a cylinder axis, and the iron stator core (10) has an end face which is oriented in the direction of the cylinder axis, and
- a ring segment is accommodated between two adjacent radially oriented centre lines (40) of two immediately adjacent internal teeth (19) as an end face (AFe) between the two adjacent radially oriented centre lines (40) of two immediately adjacent internal teeth (19),
- and the said end face (AFe) comprises the flat portions of two half internal teeth (19) and the corresponding yoke surface portion between the centre lines (40),
- and a slot area (A_{Nut}) is determined from contours of a yoke surface and the internal teeth (19) and a circular boundary line between two tooth heads (50) of the internal teeth (19) is determined,
- wherein a ratio A which is formed from the slot area (A_{Nut}) between the two adjacent radially oriented centre lines (40) and the end face (AFe) between the two adjacent radially oriented centre lines (40)
- is between 0.4 and 0.6 in the case of the iron stator core (10) having thirty-six internal teeth (19), and
- is between 0.45 and 0.6 in the case of the iron stator core (10) having forty-eight internal teeth (19),
- wherein in the case of an outer contour of the yoke (16) in the radial direction between the two adjacent radially oriented centre lines (40) not describing a continuous circular line, the smallest diameter which describes the outer contour of the iron stator core in a region (b3) above the slot (25) is used as the outside diameter for calculating the end face (AFe).

2. Stator according to Claim 1, **characterized in that** the iron stator core (10) has thirty-six internal teeth (19), and the ratio A is between 0.40 and 0.55.

3. Stator according to either of the preceding claims, **characterized in that** the slot filling factor (F) is between 50% and 80%.

4. Stator according to Claim 3, **characterized in that** the slot filling factor F is between 60% and 70%.

5. Stator according to one of the preceding claims, **characterized in that** a slot (25) has a contour which is bounded on the yoke side by opposite tooth sides (59) and a yoke contour (62), wherein the tooth sides (59) of a slot (25) are at a maximum distance (b_{z3}) from one another in the circumferential direction, and **in that** a slot pitch (τ₃) is the distance between two directly adjacent tooth centres of the iron stator core (10) on the diameter of the maximum distance (b_{z3}), wherein a ratio (c₃) formed from the distance (b_{z3}) and the slot pitch (τ₃) on the tooth is between 0.45 and 0.65.

6. Stator according to one of the preceding claims, **characterized in that** a slot (25) has a contour which is bounded on the tooth head side by opposite tooth sides (59) and tooth head contours (62), wherein the tooth sides (59) of a slot (25) are at a distance (b_{z2}) from one another in the circumferential direction at the transition to the tooth head contours (65), and **in that** a slot pitch (τ₂) is the distance between two directly adjacent tooth centres on the diameter of the distance (b_{z2}) of the iron stator core (10), wherein a ratio (c₂) formed from the distance (b_{z2}) and the slot pitch (τ₂) at the tooth is between 0.45 and 0.65.

7. Stator according to one of the preceding claims, **characterized in that** (c₂) is between 0.50 and 0.60, and (c₃) is between 0.47 and 0.60.

8. Stator according to one of the preceding claims, **characterized in that** the tooth sides (59) merge with the tooth head contours (65) and the yoke contour (62) by rounded transitions, wherein the radii are between 0.3 mm and 2.0 mm.

## Revendications

1. Stator de machine électrique, en particulier générateur de courant triphasé, le stator (36) étant fabriqué selon la technique de paquet plat et étant constitué au moins d'un noyau de stator (10, 30), le noyau de stator (10) présentant une forme essentiellement cylindrique annulaire, le noyau de stator (10) présentant une direction axiale (a) qui est orientée dans la direction d'un axe de cylindre et le noyau de stator (10) ayant une surface frontale orientée dans la direction de l'axe de cylindre et
- un segment annulaire circulaire étant reçu entre les deux lignes médianes (40) adjacentes orientées radialement de deux dents intérieures (19) immédiatement adjacentes, en tant que surface frontale (AFe) entre deux lignes médianes (40) adjacentes orientées radialement de deux dents intérieures (19) immédiatement adjacentes,
- et cette surface frontale (AFe) étant constituée des parties de surface de deux demi-dents intérieures (19) et de la partie de surface de culasse correspondante entre les lignes médianes (40),
- et une surface de rainure (A_{Nut}) étant définie à partir de contours d'une surface de culasse et des dents intérieures (19) et d'une ligne de délimitation circulaire entre deux têtes de dent (50) des dents intérieures (19),
- un rapport A formé par la surface de rainure (A_{Nut}) entre les deux lignes médianes (40) adjacentes orientées radialement et la surface frontale (AFe) entre les deux lignes médianes (40) adjacentes orientées radialement
- valant entre 0,4 et 0,6 dans le cas où le noyau de stator (10) a trente-six dents intérieures (19) et
- valant entre 0,45 et 0,6 dans le cas où le noyau de stator (10) a quarante-huit dents intérieures (19),
- dans le cas où un contour extérieur de la culasse (16) dans la direction radiale entre les deux lignes médianes (40) adjacentes orientées radialement ne décrit pas de ligne circulaire continue, le plus petit diamètre, que le contour extérieur du noyau de stator décrit dans une région (b3) au-dessus de la rainure (25), étant utilisé en tant que diamètre extérieur pour calculer la surface frontale (AFe).

2. Stator selon la revendication 1, **caractérisé en ce que** le noyau de stator (10) a trente-six dents intérieures (19) et le rapport A se situe entre 0,40 et 0,55.

3. Stator selon l'une quelconque des revendications précédentes, **caractérisé en ce que** le facteur de remplissage de rainure (F) vaut entre 50 % et 80 %.

4. Stator selon la revendication 3, **caractérisé en ce que** le facteur de remplissage de rainure F vaut entre 60 % et 70 %.

5. Stator selon l'une quelconque des revendications précédentes, **caractérisé en ce qu'**une rainure (25) présente un contour qui est délimité du côté de la culasse par des côtés de dent opposés (59) et un contour de culasse (62), les côtés de dent (59) d'une rainure (25) étant situés à une distance maximale (b_{z3}) l'un de l'autre dans la direction périphérique, et **en ce qu'**un pas de rainure (τ₃) est la distance entre deux centres de dent directement adjacents du noyau de stator (10) sur le diamètre de la distance maximale (b_{z3}), un rapport (c₃) formé par la distance (b_{z3}) et le pas de rainure (τ₃) sur la dent valant entre 0,45 et 0, 65.

6. Stator selon l'une quelconque des revendications précédentes, **caractérisé en ce qu'**une rainure (25) présente un contour qui est délimité du côté de la tête de dent par des côtés de dent opposés (59) et des contours de tête de dent (62), les côtés de dent (59) d'une rainure (25) au niveau de la transition vers les contours de tête de dent (65) étant situés à une distance (b_{z2}) l'un de l'autre dans la direction périphérique, et **en ce qu'**un pas de rainure (τ₂) est la distance entre deux centres de dent directement adjacents sur le diamètre de la distance (b_{z2}) du noyau de stator (10), un rapport (c₂) formé par la distance (b_{z2}) et le pas de rainure (τ₂) sur la dent valant entre 0,45 et 0, 65.

7. Stator selon l'une quelconque des revendications précédentes, **caractérisé en ce que** (c₂) vaut entre 0,50 et 0,60 et (c₃) vaut entre 0,47 et 0,60.

8. Stator selon l'une quelconque des revendications précédentes, **caractérisé en ce que** les côtés de dent (59) se prolongent, par des transitions arrondies, en les contours de tête de dent (65) et le contour de culasse (62), les rayons valant entre 0,3 mm et 2,0 mm.
